# EUROPEAN PATENT APPLICATION

(11) **EP 1 898 678 A1**
(43) Date of publication of application: **12.03.2008**
(21) Application number: 07112988.6
(22) Date of filing: 24.07.2007
(51) Int. Cl.: H05B 33/08

(54) **Display apparatus and brightness control method thereof**

(30) Priority: 04.09.2006 KR 20060084649
(71) Applicant: Samsung Electronics Co., Ltd., Suwon-si 442-742 Gyeonggi-do (KR)
(72) Inventor: Kang, Jeong-il, Yongin-si Gyeonggi-do (KR); Lee, Sang-hoon, Nam-gu Ulsan (KR)
(74) Representative: Robinson, Ian Michael

(57) **Abstract**

Discloses is a display apparatus capable of alleviating an offset value occurring for the same current command value and minimizing a delay time taken for a light source (10) to emit light after transmission of the current command value. The display apparatus comprises a display part (60) that displays an image based on an image signal; a light source (10) that supplies light to the display part (60); a current commanding part (40) that outputs a current command value according to a brightness of the image; a current detecting part (30) that detects current supplied to the light source (10); and a controller (50) that sets the outputted current command value as a reference current command value if a value of the detected current value falls within a predetermined tolerable range, and controls the current commanding part (40) such that the reference current command value is reflected in a target current command value of the light source (10) depending on the brightness of the image.

## Description

### BACKGROUND OF THE INVENTION

### Field of the Invention

The present invention relates to a display apparatus and brightness control method thereof. More particularly, the present invention relates to a display apparatus and brightness control method which sets the magnitude of current supplied to a light source.

### Description of the Related Art

A display apparatus displays an image based on an image signal. In recent years, among display apparatuses, a DLP (digital light processing) projection display apparatus mainly uses a light emitting diode (LED) that can represent color over a wider range than a conventional ultra high power (UHP) lamp and emit light instantly when a light source is instructed to be driven, as a light source.

In such a display apparatus, a digital current command value corresponding to an image to be displayed on a screen is generated, converted into an analog command value at a specified time, and then transmitted to an LED driving circuit that drives the light source to emit light. An offset value, which is difficult to be predicted, occurs due to variation of a reference voltage of a D/A converter that converts the digital current command value into the analog current value, and dispersion of parts contained in the LED driving circuit.

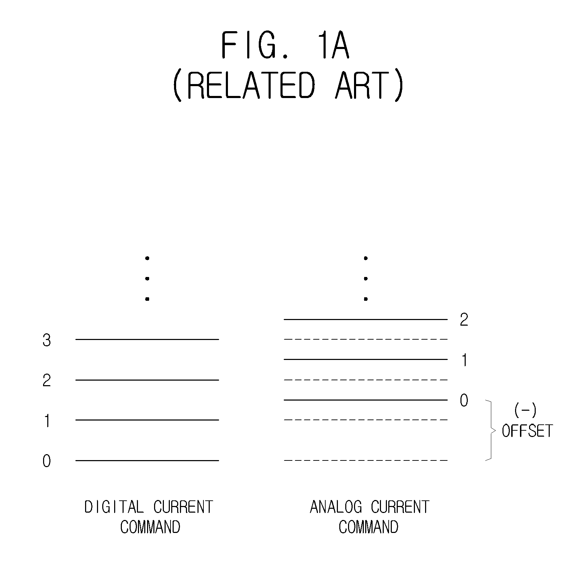

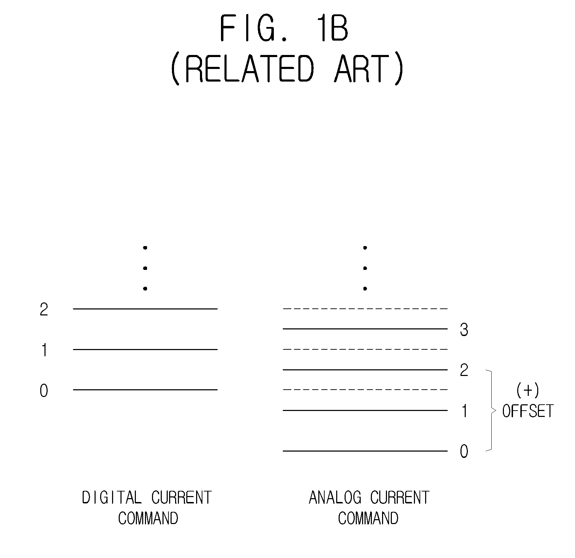

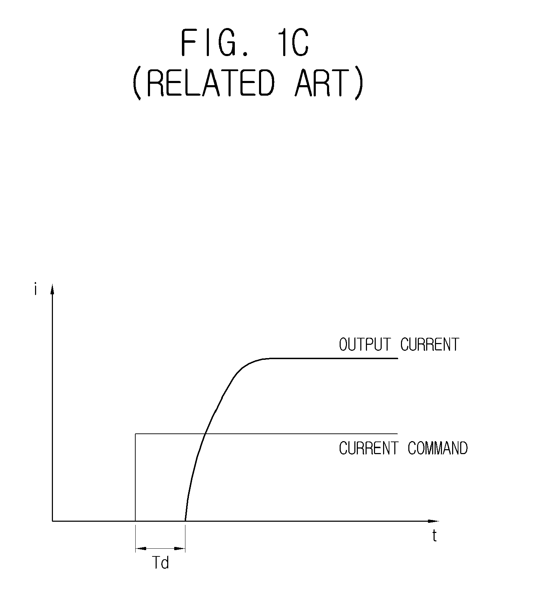

FIGs. 1A and 1B show an example where an output analog current command value is varied for the same digital current command value in a conventional display apparatus. As shown in FIG. 1A, if a negative offset value occurs while a digital current command value to be supplied to a light source is converted into an analog current command value, even though the digital current command value of 1 is provided to an LED driving circuit, the light source may not emit light since the analog current command value corresponding to the digital current value of 1 is smaller than 0.

On the other hand, as shown in FIG. 1B, if a positive offset value occurs while a digital current command value to be supplied to a light source is converted into an analog current command value, even though the digital current command value of 0 is provided to the LED driving circuit such that the light source does not emit light, the analog current command value corresponding to the digital current value of 0 may become larger than 1, thereby emitting the light source.

To overcome the problem shown in FIG. 1B, the LED driving circuit has been designed such that the negative offset value of the digital current command value shown in FIG. 1a becomes sufficiently small.

As shown in FIG. 1C, however, as the negative offset value becomes smaller, a response speed of the LED driving circuit becomes lower because a time taken for the light source to emit light after the digital current command value is provided to the LED driving circuit, that is, a delay time Td, becomes longer.

Accordingly, there is a need for an improved display apparatus and a brightness control method thereof, which are capable of alleviating an offset value occurring for the same current command value and minimizing a delay time taken for a light source to emit light after transmission of the current command value.

### SUMMARY OF THE INVENTION

According to the present invention there is provided an apparatus and method as set forth in the appended claims. Other features of the invention will be apparent from the dependent claims, and the description which follows.

The exemplary embodiments of the present invention address at least some of the above problems and/or disadvantages and provide at least some of the advantages described below.

An aspect of the present invention provides a display apparatus and a brightness control method thereof, which are capable of alleviating an offset value occurring for the same current command value and minimizing a delay time taken for a light source to emit light after transmission of the current command value.

Exemplary embodiments of the present invention can be achieved by providing a display apparatus comprising: a display part that displays an image based on an image signal; a light source that supplies light to the display part; a current commanding part that outputs a current command value according to a brightness of the image; a current detecting part that detects current supplied to the light source; and a controller that sets the outputted current command value as a reference current command value if a value of the detected current value falls within a predetermined tolerable range, and controls the current commanding part such that the reference current command value is reflected in a target current command value of the light source depending on the brightness of the image.

According to exemplary embodiments of the present invention, the controller comprises a voltage comparing part that compares a reference voltage lower than a threshold voltage at which the light source begins to emit light with a driving voltage corresponding to the current detected by the current detecting part, and, as a result of the comparison, if the driving voltage is equal to the reference voltage, the controller sets the outputted current command value as the reference current command value.

According to exemplary embodiments of the present invention, the controller increases or decreases the driving voltage sequentially, and, if the increased or decreased driving voltage is equal to the reference voltage, sets the outputted current command value as the reference current command value.

According to exemplary embodiments of the present invention, the display apparatus further comprises a storing part, and the controller stores the reference current command value in the storing part and reflects the reference current command value stored in the storing part in the target current command value.

According to exemplary embodiments of the present invention, the controller determines the reference current command value if there exists no current command value for emission of the light source.

According to exemplary embodiments of the present invention, the reference current command value is smaller than a variation of the current command value.

According to exemplary embodiments of the present invention, the controller further comprises a delay time calculating part that calculates a delay time from a point of time when the current command value is outputted from the current commanding part to a point of time when the light source emits light, and, if the delay time calculated by the delay time calculating part is less than a predetermined period of time, the controller decreases the reference current command value by a specified value.

According to exemplary embodiments of the present invention, the light source comprises a light emitting diode (LED).

According to exemplary embodiments of the present invention, the display apparatus further comprises a digital micro-mirror device (DMD) module having a plurality of mirrors, and the controller controls the light outputted from the light source to be reflected into the display part by the plurality of mirrors.

Exemplary embodiments of the present invention can be also achieved by providing a brightness control method of a display apparatus having a light source, comprising: outputting a current command value for supply of current to the light source; detecting current supplied to the light source; determining whether a value of the detected current value falls within a predetermined tolerable range; if it is determined that the value of the detected current value falls within the predetermined tolerable range, setting the outputted current command value as a reference current command value; and reflecting the reference current command value in a target current command value of the light source.

According to exemplary embodiments of the present invention, setting the outputted current command value as the reference current command value comprises comparing a reference voltage lower than a threshold voltage at which the light source begins to emit light with a driving voltage corresponding to the detected current, and, as a result of the comparison, if the driving voltage is equal to the reference voltage, the outputted current command value is set as the reference current command value.

According to exemplary embodiments of the present invention, setting the outputted current command value as a reference current command value comprises increasing or decreasing the driving voltage sequentially, and, if the increased or decreased driving voltage is equal to the reference voltage, setting the outputted current command value as the reference current command value.

According to exemplary embodiments of the present invention, detecting the current supplied to the light source comprises determining whether there exists a current command value for emission of the light source, and setting the outputted current command value as the reference current command value comprises determining the reference current command value if it is determined that there exists no current command value for emission of the light source.

According to exemplary embodiments of the present invention, the determined reference current command value is smaller than variation of the current command value.

According to exemplary embodiments of the present invention, detecting the current supplied to the light source further comprises calculating a delay time from a point of time when the current command value is outputted to a point of time when the light source emits light, and setting the outputted current command value as the reference current command value comprises decreasing the reference current command value by a specified value if the calculated delay time is less than a predetermined period of time.

According to exemplary embodiments of the present invention, the light source comprises a light emitting diode (LED).

Exemplary embodiments of the present invention can be also achieved by providing a computer-readable recording medium storing a program for controlling brightness of a display apparatus, comprising: a first set of instructions for controlling the display apparatus to output a current command value for supply of current to the light source; a second set of instructions for controlling the display apparatus to detect current supplied to the light source; a third set of instructions for controlling the display apparatus to determine whether a value of the detected current value falls within a predetermined tolerable range; a fourth set of instructions for controlling the display apparatus to set the outputted current command value as a reference current command value if it is determined that the value of the detected current value falls within the predetermined tolerable range; and a fifth set of instructions for controlling the display apparatus to reflect the reference current command value in a target current command value of the light source.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

FIGs. 1a, 1b and 1c are views showing forms of current outputted for the same current command in a conventional display apparatus;
FIGs. 2 and 3 are block diagrams illustrating a configuration of a display apparatus according to an exemplary embodiment of the present invention; and
FIG. 4 is a flow chart illustrating a brightness control method of the display apparatus according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Reference will now be made in detail to exemplary embodiments of the present invention, examples of which are illustrated in the accompanying drawings.

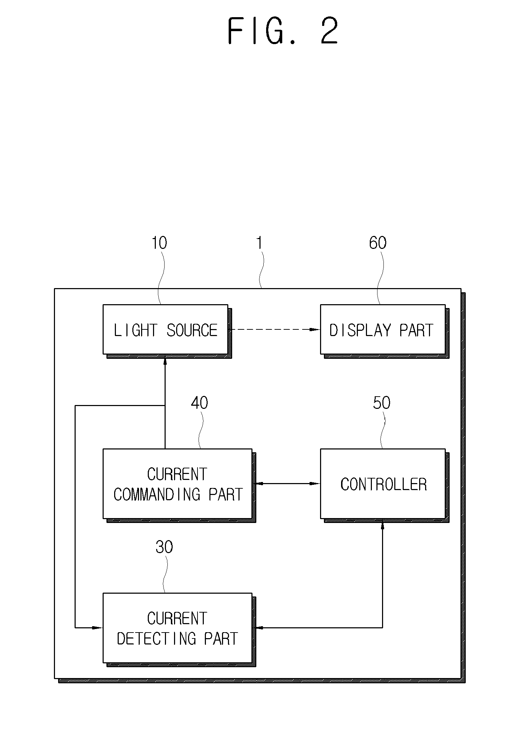

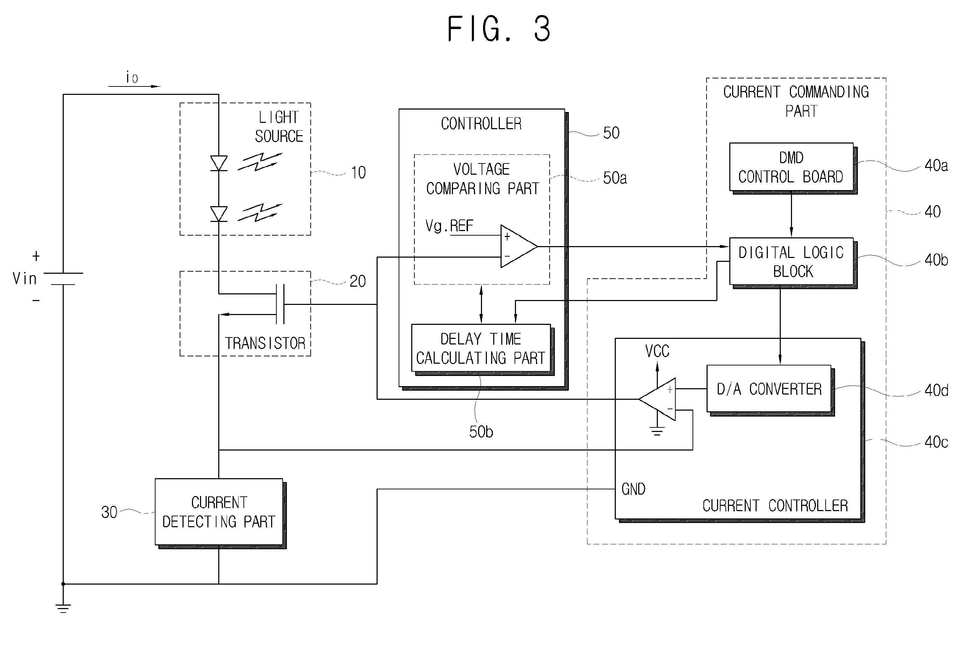

As shown in FIGs. 2 and 3, a display apparatus according to an exemplary embodiment of the present invention comprises a light source 10, a transistor 20, a current detecting part 30, a current commanding part 40, a controller 50 and a display part 60.

The light source 10 supplies light to the display part 60 for display of an image, and, preferably but not necessarily, may comprise one or more light emitting diodes (LEDs).

The transistor 20 continuously supplies current, which is proportional to an output current, to the light source 10, as shown in FIG. 3. The transistor 20 may comprise a bipolar junction transistor (BJT), or preferably, a metal-oxide semiconductor field effect transistor (MOSFET) which is inexpensive, highly controllable, and has a good temperature characteristic.

The current detecting part 30 detects current supplied to the light source 10 by using a current mirror, a current sensor or the like or detecting a voltage drop generated by the current supplied to the light source 10.

The current commanding part 40 outputs a current command value depending on a brightness of an image displayed on the display part 60. In an exemplary embodiment, the current commanding part 40 may comprise a DMD (digital micro-mirror device) control board 40a, a digital logic block 40b and a current controller 40c.

The DMD control board 40a generates a current command value corresponding to an image displayed on the display part 60 of the display apparatus and may be embodied by a hardware such as a microcomputer, a DSP (digital signal processor), a FPGA (field programmable gate array) or the like.

The digital logic block 40b receives the current command value outputted from the DMD control board 40a, outputs a digital current command value at a point of time of emission of the light source 10, and transmits the outputted digital current command value to the current controller 40c. It is preferable, but not necessary, that the digital logic block 40b is embodied by a microcomputer and software.

The current controller 40c comprises a D/A converter 40d and an OP amplifier and controls the transistor 20 such that a current value detected by the current detecting part 30 becomes equal to the digital current command value outputted from the digital logic block 40b.

The controller 50 determines whether or not the current value detected by the current detecting part 30 falls within a predetermined tolerable range, sets the current command value, which is outputted from the current commanding part 40, as a reference current command value if it is determined that the current value falls within the predetermined tolerable range, and controls the current commanding part 40 such that the reference current command value is reflected in a target current command value of the light source 10 depending on brightness of an image. The controller 50 comprises a voltage comparing part 50a and a delay time calculating part 50b.

The controller 50 presets a reference voltage lower than a threshold voltage at which the light source 10 begins to emit light, and compares a driving voltage, which is detected by a gate of the transistor 20, with the reference voltage by means of the voltage comparing part 50a comprising an OP amplifier with the reference voltage set.

As a result of the comparison, if the driving voltage is smaller than the reference voltage, the voltage comparing part 50a outputs a level of 1 such that the current command value outputted from the current commanding part 40 is increased by a specified value. On the contrary, if the driving voltage is larger than the reference voltage, the current command value outputted from the current commanding part 40 is set as the reference current command value, and the voltage comparing part 50a outputs a level of 0 such that an LED driving circuit starts a normal operation by reflecting the reference current command value in the target current command value of the light source 10 depending on the brightness of the image.

As described above, when the level of 1 is outputted from the voltage comparing part 50a, the controller 50 increases the current command value outputted from the current commanding part 40 by the specified value. Thereafter, when the LED driving circuit reaches a steady stationary state, the voltage comparing part 50a compares the driving voltage with the reference voltage again. If a level of 1 is outputted from the voltage comparing part 50a, the above-described operation is repeated to increase the current command value. If a level of 0 is outputted from the voltage comparing part 50a, the current command value outputted from the current commanding part 40 is set as the reference current command value, the controller 50 controls such that the LED driving circuit starts a normal operation by reflecting the reference current command value in the target current command value of the light source 10, depending on the brightness of the image.

That is, the controller 50 determines whether or not the current value detected by the current detecting part 30 falls within the predetermined tolerable range. Here, the predetermined tolerable range refers to a current value before the light source 10 actually emits light, although current is supplied to the light source 10. When the target current command value of the light source 10 depends on the brightness of the image as the basis of the predetermined tolerable range, an offset value occurring for the same current command can be alleviated and a delay time, taken for the light source 10 to emit light after the current command value is outputted from the current commanding part 40, can be minimized.

It is understood that the controller 50 sets the reference current command value by setting a sufficiently large initial current command value, and if necessary, outputting a level of 1 from the voltage comparing part 50a if the driving voltage is larger than the reference voltage, and decreasing the current command value outputted from the current commanding part 40 by a specified value.

The delay time calculating part 50b calculates a delay time from a point of time at which the digital current command value is outputted from the digital logic block 40b to a point of time at which the light source 10 emits light, and, if the calculated delay time is less than a predetermined value, resets the delay time to have a smaller value within a range in which the reference current command value has a positive value to minimize power consumption.

Here, the controller 50 may determine the reference current command value not only at a point of time when power is first applied to the display apparatus 1, but also if the digital current command value is not outputted from the digital logic block 40b for more than predetermined period of time.

In addition, by storing a first determined reference current command value in a storage and causing current in which the stored reference current command value is reflected to be supplied to the light source, the controller 50 may omit later determination of a reference current command value, if necessary.

In addition, it is preferable but not necessary, that the controller 50 sets the reference current command value to be smaller than a variation width of the digital current command value outputted from the digital logic block 40b. If the reference current command value is set to be smaller than the variation width of the digital current command value, current supplied to the light source 10 can maintain a minimum value but larger than 0, and accordingly, an effect on the display part 60 of the display apparatus 1 can be minimized.

On the other hand, in case where the display apparatus 1 employs a DLP (digital light processing) method, the display apparatus 1 may further comprise a DMD (digital micro-mirror device) module having a plurality of mirrors. In this case, the controller 50 can control light outputted from the light source 10 to be reflected into the display part 60 by the plurality of mirrors.

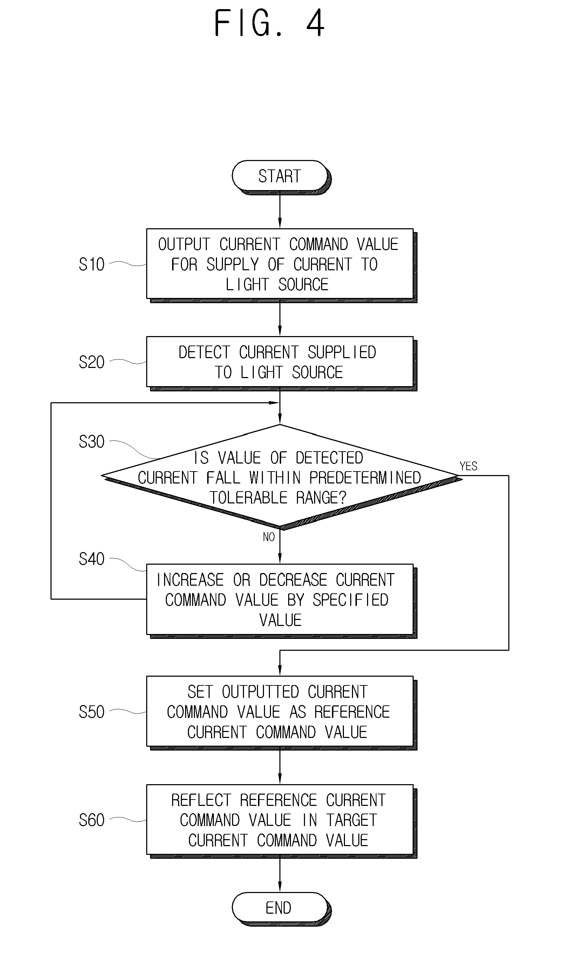

Hereinafter, a brightness control method of the display apparatus 1 according to an exemplary embodiment of the present invention will be described with reference to FIG. 4.

First, the controller 50 controls the current commanding part 40 to output the current command value for supply of current to the light source 10 at operation S10. Next, the controller 50 detects current supplied to the light source 10 through the current detecting part 30 according to the outputted current command value at operation S20. Next, the controller 50 determines whether or not a value of the detected current falls within a predetermined tolerable range at operation S30.

If it is determined that the value of the detected current does not fall within the predetermined tolerable range, the controller 50 increases or decreases the current command value outputted from the current commanding part 40 at operation S40 and then returns to the operation S30 where it is determined whether or not the value of the detected current falls within the predetermined tolerable range.

Specifically, if a driving voltage detected by a gate of the transistor 20 is smaller than the reference voltage and smaller than the threshold voltage at which the light source 10 begins to emit light, the controller 50 controls the current commanding part 40 to increase the current command value. On the contrary, if the driving voltage is larger than the reference voltage, the controller 50 controls the current commanding part 40 to decrease the current command value.

On the other hand, if it is determined that the value of the detected current falls within the predetermined tolerable range, the controller 50 sets the current command value as the reference current command value at operation S50. Finally, the controller 50 reflects the set reference current command value in a target current command value of the light source 10 depending on brightness of an image at operation S60.

The operations S50 and 60 may be performed not only at a point of time when power is first applied to the display apparatus 1, but also if the digital current command value is not outputted from the digital logic block 40b for more than predetermined period of time.

As apparent from the above description, exemplary embodiments of the present invention provide a display apparatus and a brightness control method thereof, which are capable of alleviating an offset occurring for the same current command value and minimizing a delay time taken for a light source to emit light after transmission of the current command value, thereby increasing a response speed of an LED driving circuit.

The present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display part (60) that displays an image based on an image signal;
a light source (10) that supplies light to the display part (60);
a current commanding part (40) that outputs a current command value according to a brightness of the image;
a current detecting part (30) that detects current supplied to the light source (10); and
a controller (50) that sets the outputted current command value as a reference current command value if a value of the detected current value falls within a predetermined tolerable range, and controls the current commanding part (40) such that the reference current command value is reflected in a target current command value of the light source (10) depending on the brightness of the image.

2. The display apparatus according to claim 1, wherein the controller (50) comprises a voltage comparing part (50a) that compares a reference voltage lower than a threshold voltage at which the light source (10) begins to emit light with a driving voltage corresponding to the current detected by the current detecting part (30),
wherein, as a result of the comparison, if the driving voltage is equal to the reference voltage, the controller (50) sets the outputted current command value as the reference current command value.

3. The display apparatus according to claim 2, wherein the controller (50) increases or decreases the driving voltage sequentially, and, if the increased or decreased driving voltage is equal to the reference voltage, sets the outputted current command value as the reference current command value.

4. The display apparatus according to claim 3, further comprising a storing part,
wherein the controller (50) stores the reference current command value in the storing part and reflects the reference current command value stored in the storing part in the target current command value.

5. The display apparatus according to claim 1, wherein the controller (50) determines the reference current command value if there exists no current command value for emission of the light source (10).

6. The display apparatus according to claim 5, wherein the reference current command value is smaller than variation of the current command value.

7. The display apparatus according to claim 2, wherein the controller (50) further comprises a delay time calculating part (50b) that calculates a delay time from a point of time when the current command value is outputted from the current commanding part (40) to a point of time when the light source (10) emits light,
wherein, if the delay time calculated by the delay time calculating part (50b) is less than a predetermined period of time, the controller (50) decreases the reference current command value by a specified value.

8. The display apparatus according to claim 7, wherein the light source (10) comprises a light emitting diode (LED).

9. The display apparatus according to claim 8, further comprising a digital micro-mirror device (DMD) module having a plurality of mirrors,
wherein the controller (50) controls the light outputted from the light source (10) to be reflected into the display part (60) by the plurality of mirrors.

10. A brightness control method of a display apparatus having a light source (10), comprising:
outputting a current command value for supply of current to the light source (10);
detecting current supplied to the light source (10);
determining whether a value of the detected current value falls within a predetermined tolerable range;
if it is determined that the value of the detected current value falls within the predetermined tolerable range, setting the outputted current command value as a reference current command value; and
reflecting the reference current command value in a target current command value of the light source (10).

11. The brightness control method according to claim 10, wherein setting the outputted current command value as the reference current command value comprises comparing a reference voltage lower than a threshold voltage at which the light source (10) begins to emit light with a driving voltage corresponding to the detected current,
wherein, as a result of the comparison, if the driving voltage is equal to the reference voltage, the outputted current command value is set as the reference current command value.

12. The brightness control method according to claim 11, wherein setting the outputted current command value as a reference current command value comprises increasing or decreasing the driving voltage sequentially, and, if the increased or decreased driving voltage is equal to the reference voltage, setting the outputted current command value as the reference current command value.

13. The brightness control method according to claim 10, wherein detecting the current supplied to the light source (10) comprises determining whether there exists a current command value for emission of the light source (10), and
wherein setting the outputted current command value as the reference current command value comprises determining the reference current command value if it is determined that there exists no current command value for emission of the light source (10).

14. The brightness control method according to claim 13, wherein the determined reference current command value is smaller than variation of the current command value.

15. The brightness control method according to claim 14, wherein detecting the current supplied to the light source (10) further comprises calculating a delay time from a point of time when the current command value is outputted to a point of time when the light source (10) emits light,
wherein setting the outputted current command value as the reference current command value comprises decreasing the reference current command value by a specified value if the calculated delay time is less than a predetermined period of time.

16. The brightness control method according to claim 10, wherein the light source (10) comprises a light emitting diode (LED).

17. A computer-readable recording medium storing a program for controlling brightness of a display apparatus, comprising:
a first set of instructions for controlling the display apparatus to output a current command value for supply of current to the light source (10);
a second set of instructions for controlling the display apparatus to detect current supplied to the light source (10);
a third set of instructions for controlling the display apparatus to determine whether a value of the detected current value falls within a predetermined tolerable range;
a fourth set of instructions for controlling the display apparatus to set the outputted current command value as a reference current command value if it is determined that the value of the detected current value falls within the predetermined tolerable range; and
a fifth set of instructions for controlling the display apparatus to reflect the reference current command value in a target current command value of the light source (10).
